# EUROPEAN PATENT SPECIFICATION

(11) **EP 2 790 387 B1**
(45) Date of publication and mention of the grant of the patent: **20.01.2021**
(21) Application number: 14160809.1
(22) Date of filing: 20.03.2014
(51) Int. Cl.: H04L 29/12, H04L 29/06

(54) **Method and system for providing connectivity for an ssl/tls server behind a restrictive firewall or nat**
Verfahren und System zur Bereitstellung der Konnektivität für einen SSL/TLS-Server hinter einer restriktiven Firewall oder NAT
Procédé et système pour obtenir la connectivité d'un serveur ssl/tls derrière un nat ou pare-feu restrictif

(30) Priority: 28.03.2013 US 201313852509
(43) Date of publication of application: 15.10.2014
(73) Proprietor: BlackBerry Limited, Waterloo, ON N2K 0A7 (CA)
(72) Inventor: Xie, Kaiduan, Waterloo, Ontario N2K 0A7 (CA); Preiss, Bruno Richard, Waterloo, Ontario N2K 0A7 (CA); Sau, Jonathan Hong-Man, Waterloo, Ontario N2V 2L6 (CA); Meike, Roger Charles, Redwood City, CA California 94062 (US)
(74) Representative: Hanna Moore + Curley

(56) References cited:
- WO-A1-2005/057882
- WO-A1-2012/044277
- MAHY UNAFFILIATED P MATTHEWS ALCATEL-LUCENT J ROSENBERG JDROSEN NET R: "Traversal Using Relays around NAT (TURN): Relay Extensions to Session Traversal Utilities for NAT (STUN); rfc5766.txt", TRAVERSAL USING RELAYS AROUND NAT (TURN): RELAY EXTENSIONS TO SESSION TRAVERSAL UTILITIES FOR NAT (STUN); RFC5766.TXT, INTERNET ENGINEERING TASK FORCE, IETF; STANDARD, INTERNET SOCIETY (ISOC) 4, RUE DES FALAISES CH- 1205 GENEVA, SWITZERLAND, 29 April 2010 (2010-04-29), pages 1-67, XP015070780, [retrieved on 2010-04-29]
- DIERKS T ET AL: "RFC 5246 - The Transport Layer Security (TLS) Protocol", INTERNET CITATION, 31 August 2008 (2008-08-31), pages 1-104, XP002721348, Retrieved from the Internet: URL:http://tools.ietf.org/html/rfc5246 [retrieved on 2014-03-06]
- S Perreault ET AL: "Internet Engineering Task Force (IETF) Traversal Using Relays around NAT (TURN) Extensions for TCP Allocations", , 1 November 2010 (2010-11-01), XP055350765, Retrieved from the Internet: URL:https://tools.ietf.org/pdf/rfc6062.pdf [retrieved on 2017-03-02]

## Description

### FIELD OF THE DISCLOSURE

The present disclosure relates to secure socket layer (SSL)/transport layer security (TLS) and in particular relates to an SSL/TLS server behind a restrictive firewall or network address translator (NAT).

### BACKGROUND

Any server running or residing on an Internet Protocol (IP) node that resides on a first IP network, where the first IP network is a restricted access IP network, may not reachable by a second IP node that resides on a second IP network where the second IP network is not the same as the first IP network but is connected to the first IP network. This may be due to the first IP node using an IP address that is dynamically allocated and therefore subject to change. It may also be because the first IP node is behind a firewall and/or NAT which may restrict receiving incoming IP communications including datagrams, packets, connections, communications, and sessions, among other possibilities. Further, a third IP node that resides on the first IP network may also not be able to reach the first IP node due to the first IP node using a dynamic IP address.

The use of an SSL/TLS server on an IP node that resides only on one or more restricted access IP network networks may be desirable in some situations. For example, an SSL/TLS server may be implement on a mobile device in order to be able to securely host services, functionality or abilities including remote user file access, remote user control of the mobile device, the ability to receive or terminate secure incoming voice/video over Internet Protocol (VoIP) calls, among others.

For example, one popular usage of SSL/TLS is for hypertext transfer protocol over TLS (HTTPS), where the user can access the hypertext transfer protocol (HTTP) server with end to end security from the browser. Such application may, for example, be used for such functionality as online banking, online shopping, among others.

WO2005057882 discloses methods, systems, and mediums for enabling clients to traverse firewall and Network Address Translation (NAT) installations by using probe packets between servers and clients to communicate the addresses modified by the NAT.

WO2012044277A discloses a system for accessing networked devices without accessible network addresses, via VIP addresses. The system consists of a soft Device Services Controller (DSC), downloaded on a first local network from the device service manager (DSM) on a wide area network, and a VIP Access enabled device on a second local network separate from the first area network. The soft DSC and associated VIP Access enabled device create a virtual network interface and corresponding virtual IP address (VIP) to permit outgoing TCP/IP conduit connection to the DSM. When networking traffic arrives at the virtual networking interface with the associated VIP, the soft DSC automatically processes and forwards that traffic to the DSM.

### SUMMARY

According to a first aspect there is provided a method according to claim 1; according to a second aspect there is provided a relay service node according to claim 9. The invention is defined by the independent claims. Further embodiments are defined by the dependent claims.

### BRIEF DESCRIPTION OF THE DRAWINGS

The present disclosure will be better understood with reference to the drawings, in which:
**Figure 1** is an example data flow diagram showing handshaking for SSL/TLS communications between a client and a server;
**Figure 2** is an example data flow diagram showing handshaking for resumption of an SSL session between a client and a server;
**Figure 3** is a block diagram showing an example network architecture for communication between a client and a peer using a TURN server;
**Figure 4** is an exemplary data flow diagram showing initialization of a client to a TURN server;
**Figure 5** is an exemplary data flow diagram showing establishment of a connection from a client to a peer through a TCP TURN server;
**Figure 6** is an exemplary data flow diagram showing establishment of a connection from a peer to a client through a TCP TURN server;
**Figure 7** is a simplified data flow diagram showing the use of an intermediary service for SSL communications;
**Figure 8** is an example block diagram showing the use of a relay service node to relay SSL/TLS communications between an SSL/TLS server in a restricted access network and an SSL/TLS client;
**Figure 9** is an example data flow diagram showing establishment of a first connection between a first IP node and a relay service node;
**Figure 10** is an example flow diagram showing refreshing of binding for a first connection between a first IP node and a relay service node;
**Figure 11** is an example data flow diagram showing the establishment of an SSL/TLS connection between a second IP node and a first IP node;
**Figure 12** is an example block diagram showing the use of a relay service front end in a first IP node for SSL communications between an SSL/TLS server in a restricted access network and an SSL/TLS client;
**Figure 13** is an example data flow diagram showing the establishment of an SSL/TLS connection between a second IP node and a first IP node using a push notification server; and
**Figure 14** is a simplified block diagram of an example computing device.

### DETAILED DESCRIPTION OF THE DRAWINGS

The present disclosure provides a method at a relay service node to facilitate establishment of a secure connection between a first node within a restrictive access network, and a second node, the method comprising: accepting a control connection from the first node; accepting a second connection from the second node, and receiving, over the second connection, a message requesting secure connection establishment with the first node and providing an identifier for the first node; sending, over the control connection, a connection attempt request to establish a third connection from the first node; accepting the third connection from the first node; binding the second connection with the third connection; and forwarding the message requesting secure connection establishment with the first node to the first node.

The present disclosure further provides a relay service node configured to facilitate establishment of a secure connection between a first node within a restrictive access network, and a second node, the relay service node comprising: a processor; and a communications subsystem, wherein the relay service node is configured to: accept a control connection from the first node; accept a second connection from the second node, and receiving, over the second connection, a message requesting secure connection establishment with the first node and providing an identifier for the first node; send, over the control connection, a connection attempt request to establish a third connection from the first node; accept the third connection from the first node; bind the second connection with the third connection; and forward the message requesting secure connection establishment with the first node to the first node.

The present disclosure further provides a method at a first node residing in a restrictive network for establishing a secure connection initiated from a second node, the method comprising: establishing a control connection with a relay service node; receiving a connection attempt request over the control connection to establish a connection with a second node; establishing a third connection with the relay service node; sending a control message over the third connection to request the relay service node to bind the a second connection from the second node and the third connection; and establishing a secure connection with the second node via the relay service node.

The present disclosure further provides a first node residing in a restrictive network configured for establishing a secure connection initiated from a second node, the first node comprising: a processor; and a communications subsystem, wherein the first node is configured to establish a control connection with a relay service node; receive a connection attempt request over the control connection to establish a connection with a second node; establish a third connection with the relay service node; send a control message over the third connection to request the relay service node to bind the a second connection from the second node and the third connection; and establish a secure connection with the second node via the relay service node.

The present disclosure provides for SSL/TLS connectivity and is typically over an IP network. An IP based network (referred to herein as an "IP network") consists of a plurality of connecting nodes that have at least, but are not limited to, one interface, referred to herein as an "IP node" and/or may consist of other IP networks. Such other IP networks may in turn consist of other IP nodes and/or other IP networks, etc. If an IP node has a plurality of interfaces, the IP node may be allowed to connect to more than one IP network at a time or may be connected multiple times to the same IP network. For example, multiple connections may be used for redundancy or fail-over. If an IP node has at least one interface providing a connection to an IP network, it may be said that the IP node resides on the IP network.

SSL/TLS is one way to provide IP based secure entrusted services between two IP based nodes or end points. Such service may be between an IP node acting as a client and an IP node acting as a server and may include, for example, an e-mail client server. The trusted service may be based on protocols including, but not limited to Simple Mail Transfer Protocol (SMTP), Internet Mail Access Protocol (IMAP), Post Office Protocol-Version 3 (POP3), an IP node acting as a Session Initiation Protocol (SIP) client or user agent and an IP node acting as a SIP server/proxy, and an IP node acting as a web client and an IP node acting as a web server, using such protocols as HTTP or File Transfer Protocol (FTP) among others. The SSL/TLS is generally well adopted in IP networks.

Handshaking for an SSL/TLS session is described in the Internet Engineering Task Force (IETF) Request For Consultation (RFC) 5246, "The Transport Layer Security (TLS) Protocol Version 1.2", August 2008. When a TLS client and server first start communicating, they agree on a protocol version, select cryptographic algorithms, optionally authenticate each other, and use public-key encryption techniques to generate shared secrets. The TLS Handshake Protocol involves the following steps:
- Exchange hello messages to agree on algorithms, exchange random values, and check for session resumption.
- Exchange the necessary cryptographic parameters to allow the client and server to agree on a premaster secret.
- Exchange certificates and cryptographic information to allow the client and server to authenticate themselves.
- Generate a master secret from the premaster secret and exchanged random values.
- Provide security parameters to the record layer.
- Allow the client and server to verify that their peer has calculated the same security parameters and that the handshake occurred without tampering by an attacker.

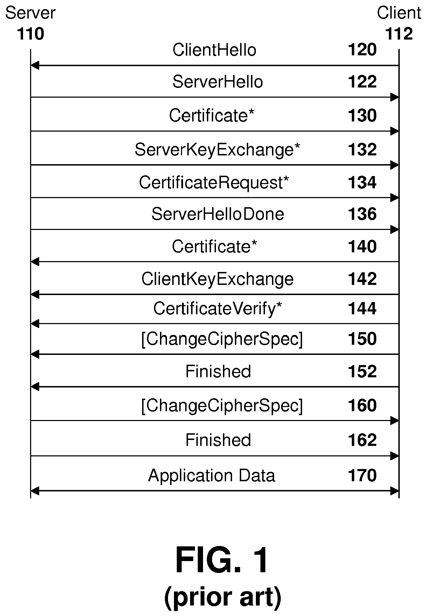

SSL/TLS provides for two kinds of handshake. The first one is called a full handshake and happens when a client and server establish a session for the first time. Reference is now made to **Figure 1****.**

As seen in **Figure 1****,** an SSL/TLS server **110** and client **112** are attempting to establish an SSL/TLS session. In the first step of the handshake protocol, the client sends a "ClientHello" message, as shown by arrow **120,** to which the server responds with a "ServerHello" message, as shown by reference **122.** If the ServerHello is not sent at reference **122** then a fatal error occurs and the connection fails.

The ClientHello and ServerHello are used to establish security enhancement capabilities between the client and the server. The ClientHello and ServerHello establish the following attributes: Protocol Version, Session ID, Cipher Suite, and a Compression Method. Additionally, two random values are generated and these are exchanged.

The actual key exchange uses up to four messages. These are the server certificate, the ServerKeyExchange, the client certificate, and the ClientKeyExchange.

Referring to **Figure 1****,** as shown by arrow **130,** the server certificate is provided to client **112** in the embodiment of **Figure 1****.** However, in some cases the certificate may not be sent and may depend on the situation. As marked in the example of **Figure 1****,** those messages having an asterisk (*) are optional or situation dependent messages that are not always sent.

Further, as shown by arrow **132,** the ServerKeyExchange is provided. Subsequently, the server provides a CertificateRequest if the server requests a certificate from the client, as shown by arrow **134** and a ServerHelloDone message shown by arrow **136.**

Based on the server certificate request at arrow **134,** client **112** provides the client certificate, as shown by arrow **140,** and a ClientKeyExchange, as shown by arrow **142.** The client certificate at arrows **140** must be provided if the server sent a CertificateRequest at reference **134.**

The content of the ClientKeyExchange message will depend on the public key algorithm selected between the ClientHello and the ServerHello. If the client has sent a certificate with signing ability, a digitally signed CertificateVerify message, as shown by arrow **144,** is sent to explicitly verify possession of the private key in the certificate.

At this point, a ChangeCipherSpec message is sent by client **112,** as shown by arrow **150,** and the client copies the pending Cipher Spec into the current Cipher Spec. The client then immediately sends a "finished" message under the new algorithms, keys and secrets, as shown by arrow **152.**

In response, server **110** sends its own ChangeCipherSpec message, as shown by arrow **160,** and then transfers the pending to the current Cipher Spec and sends a "finished" message shown by arrow **162** under the new Cipher Spec.

At this point, the handshake is complete and the client and server may begin to exchange application layer data, as shown by arrow **170.** Application data is not sent prior to the completion of the handshaking.

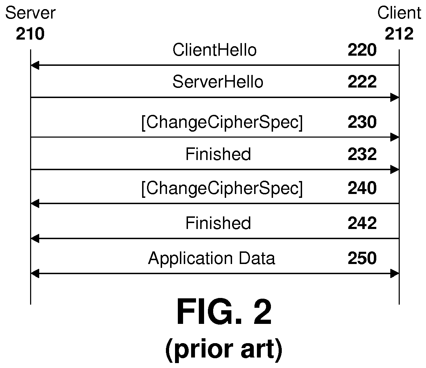

The second type of handshaking occurs when the client and server decide to resume a previous session or duplicate an existing session instead of negotiating new security parameters. Reference is now made to **Figure 2** which shows a message flow for the second form of handshaking.

In Figure 2, server 210 is communicating with client 212. The client 212 sends a ClientHello message using the Session ID of the session to be resumed shown by arrow 220 and in response the server sends a ServerHello message as shown by arrow 222. The ServerHello message at arrow 222 is based on the server checking its session cache for a match. If a match is found and the server is willing to re-establish the connection under the specified session state then the ServerHello message is sent with the same Session ID value.

After the ServerHello, both the client and the server exchange a ChangeCipherSpec message. The message from the server is shown at arrow 230 which is followed by a "finished" message 232 from the server 210 to the client 212.

The message from client 212 for the ChangeCipherSpec as shown at arrow 240 and the "finished" message is shown by arrow 242.

Once the re-establishment is complete, the client and server may begin to exchange Application Data, as shown by arrow 250.

With the second handshaking technique, if a Session ID match is not found at the server upon receiving the ClientHello message then a full handshake may occur as described above with regard to Figure 1.

Further to RFC 5246, the server name of the server that is being contacted may be provided in accordance with the IETF RFC 6066, "Transport Layer Security (TLS) Extensions: Extension Definitions", January 2011. As indicated in RFC 6066, the TLS does not provide a mechanism for a client to tell a server the name of the server it is contacting. In some cases the client may provide this information to facilitate secure connections to servers that host multiple virtual servers at a single underlying network address. In order to provide for any of the server names, the client may include an extension of the type "server_name" to the (extended) ClientHello. This Server Name
Indication (SNI) may be added to the ClientHello message. Further, for session resumption as shown in **Figure 2** above, the SNI value may be included in the ClientHello message if the full handshake also includes the SNI value.

Currently, the only server names supported are fully qualified domain name server (DNS) host names, as specified in IETF RFC 6066. SNI is widely supported by major browsers and is further supported by major libraries.

### NAT/NAT-PT and Firewalls

Some IP networks are made more private by segregating or splitting them off from other IP networks by means of such solutions as Firewall functions and Network Address Translation functions that may also provide for Port Translation (NAPT). For the sake of brevity, NAT/NAPT are referred to together as NAT hereinafter. These solutions may be, but are not necessarily, collocated with a Firewall functions, and typically may reside within but at the edge of a private or segregated network.

IP nodes that reside only on private IP network are typically not discoverable or contactable by IP nodes residing on other IP networks. In other words, inbound IP based connections cannot be established to IP nodes on the private IP network. Various reasons exist for this. A first reason that the IP node in the private network is not addressable outside of the private IP network may be because the private IP network is using an IP addressing scheme which has no routing outside of the private IP network e.g. a private IP addressing scheme (e.g. those described in IETF RFC 1918 [10] for IPv4 addressing scheme and/or those described in IETF RFC 4193 [11] for the IPv6 addressing scheme).

A second reason may be that a public addressing scheme is used but the owner of the allocated IP addresses/address-range(s) has not provided the necessary routing information required for the other IP network to route IP connections to it.

Further, for outbound IP connections, the same restrictions may apply for the same reasons. However, such restrictions are commonly overcome in order to allow the IP node to establish outgoing IP connections or communications to enable the end user of the IP node to browse the World Wide Web, download files, among other functionality.

Typically restrictions are overcome for outbound IP connections by using or employing a NAT function as provided above. This allows a "translation" of the IP addressing scheme used on the private IP network, referred to herein as a "private-IP-network-facing address" to another addressing scheme that is assumed or known to be routable at the destination IP node, referred to herein as a "public-IP-network-facing address". Thus, for example, the destination IP node can reply to the IP connection/communication establishment initiated by the IP node and both IP nodes can then transmit or receive further data. Optionally, port numbers may also be translated to allow multiple private-IP-network-facing addresses to map or bind to a single public-IP-network-facing address. This allows a plurality of IP nodes within the private IP network to use a number of public-IP-network-facing addresses that are less than the number of IP nodes and/or IP node interfaces within the private IP network.

Other reasons for incoming connections and/or outgoing IP connections or communications being denied include, but are not limited to, policies, rules, configurations, settings, among others, being applied at the firewall function. For example, the firewall may block based on the source and/or destination UDP/TCP ports of the incoming or outgoing connections, block based on the source and/or destination IP address or address range of the incoming IP connection, block based on the protocol being carried inside the IP protocol packet/datagram, among others. Typically all transport layer protocol ports are blocked or prohibited for inbound IP traffic/connections/packets/datagrams and only port 80 is used for HTTP and port 443 is used for HTTPS for the TCP transport layer protocol for outbound IP traffic/connections/packets/datagrams in order to enable IP nodes and to access the World Wide Web but nothing else. Other ports may be allowed in addition to, or alternative to, the above described ports. Such practice is common in a company, corporate or enterprise network environment, and is referred to herein as a "restricted-access network environment".

### STUN/TURN

The presence of a NAT function enhances the security of a network by obscuring the IP addresses of nodes on the network thus preventing the nodes from being directly reachable by other networks outside of the network. However, this feature also may cause issues in real-time communications in that the nodes on the network cannot directly receive incoming calls.

In order to overcome such hindrance, Session Traversal For NAT (STUN) provides a way for client software on an IP node to learn its assigned address and port on the NAT observed from other networks outside of its network. Due to the varieties and complexity of NAT/Firewall functions, STUN itself may not be enough to allow incoming traffic to traverse a NAT. Traversal Using Relays around NAT (TURN) introduces a man-in-the-middle type server that relays the IP data traffic on behalf of a client behind a NAT, thus allowing that client to be reachable for the other side of the NAT.

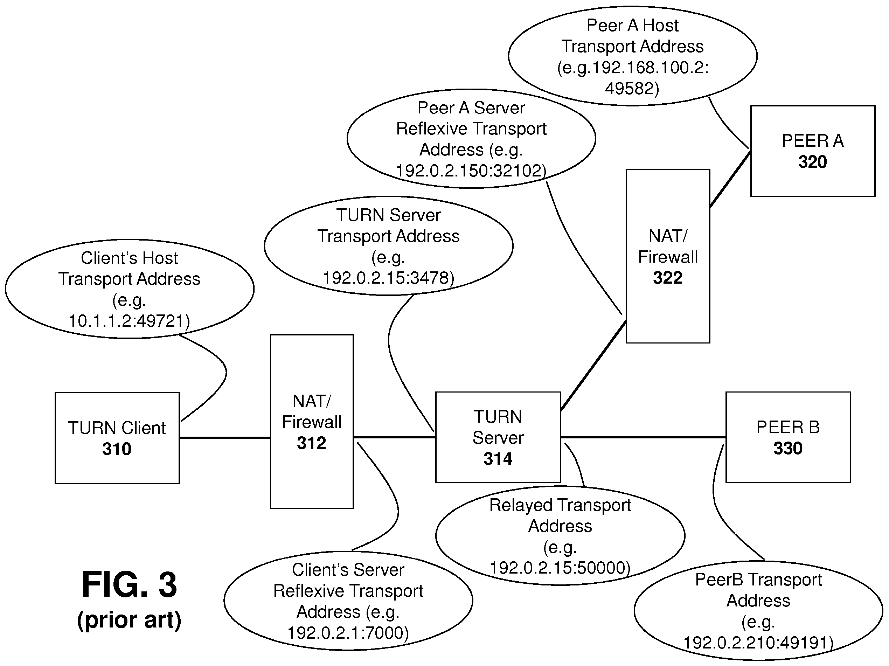

Reference is now made to Figure 3, which follows Section 2 of IETF RFC 5766, "Traversal Using Relays around NAT (TURN): Relay Extensions to Session Traversal Utilities for NAT (STUN)", April 2010. As seen in Figure 3, a TURN client 310 is a host behind a NAT/firewall 312. As indicated in IETF RFC 5766, TURN client 310 is typically connected to a private network defined by IETF RFC 1918 and through one or more NATs 312 to the public internet.

TURN client 310 communicates with a TURN server 314 through the NAT/firewall 312. As illustrated in Figure 3, the TURN client 310 is on the private side and the TURN server 314 is on the public side. As further indicated in Section 2 of IETF RFC 5766, TURN client 310 talks with TURN server 314 from an IP address and port combination called the client's host transport address. The combination of the IP address and transport layer protocol port (referred to hereafter as just "port") is called the transport address.

Thus, TURN client **310** sends TURN messages from its host transport address to transport address on the TURN server **314,** known as the TURN server transport address. The TURN server transport address may be configured on the TURN client **310** in some embodiments. In other embodiments the address may be discovered by other techniques.

Further, as indicated in Section 2 of IETF RFC 5766, since the TURN client **310** is behind the NAT, TURN server **114** may see packets from the client **310** as coming from a transport address on the NAT itself. The address may be known as the TURN client's "Server-Reflexive transport address". Packets sent by the TURN server to the TURN Client's server-reflexive transport address may be forwarded by the NAT to the TURN Client's host transport address.

TURN Client **310** uses TURN commands to create and manipulate an allocation on the TURN server **314.** An allocation is a data structure on the TURN server **314** and may contain, among other things, the allocated relayed transport address for the TURN Client **310.** The relayed transport address is the transport address on the TURN server **314** that peers can use to have the TURN server **314** relay data to the TURN client **310.** An allocation is uniquely identified by its relayed transport address. The above is specified in IETF RFC 5766.

Once an allocation is created, TURN client **310** can send application data to TURN server **314,** along with an indication of which peer the data is to be sent to. The TURN server **314** may then relay this data to the appropriate peer. The communication of the application data to the TURN server **314** may be inside a TURN message and the data may be extracted from the TURN message at the TURN server **314** and sent to the peer in a user datagram protocol (UDP) datagram. Thus, in the example of **Figure 3****,** one of a peer 320 and a peer 330 may be selected by TURN client 310. In the example of Figure 3, peer 320 is behind a NAT/firewall 322.

In the reverse direction, a peer, such as peer 330, can send application data to TURN server 314 in a UDP datagram. The application data would be sent to the relayed transport address allocated to the TURN client 310 and the TURN server 314 can then encapsulate the data inside a TURN message and send it to TURN client 310 with an indication of which peer sent the data.

Since the TURN message contains an indication of which peer the client is communicating with, a TURN client 310 can use a single allocation on TURN server 314 to communicate with multiple peers.

When the peer, such as peer 320, is behind a NAT/firewall 322, then the client may identify the peer using the server-reflexive transport address rather than its host transport address. Thus, as seen in Figure 3, NAT/firewall 322 has a server-reflexive transport address of 192.0.2.150:32102 and this would be the address that TURN client 310 utilizes instead of the peer host's actual host transport address of 192.168.100.2:49582.

Each allocation at TURN server 314 is associated with exactly one TURN client 310, and thus when the packet arrives at the relayed transport address on the TURN server 314, the TURN server 314 knows which client the data is intended for. However, a TURN client 310 may have multiple allocations between itself and the TURN server 314 at one time.

IETF RFC 5766 defines the use of UDP, TCP and transport layer security (TLS) over TCP between the TURN client 310 and TURN server 314. However, only UDP is defined to be used between the TURN server 314 and a peer such as peer 320. IETF RFC 6062, "Traversal Using Relays around NAT (TURN) Extensions for TCP Allocations" introduces TCP for communication between TURN server 314 and a peer such as peer 320.

The ability to utilize TCP connections between a TURN server and a peer allows the TURN client to then use an end to end TCP connection between the TURN client and the peer for services. Such services may include, but are not limited to, web browsing, for example using HTTP, file transfer, for example using file transfer protocol (FTP), instant messaging, for example using message session relay protocol (MSRP) among others.

In addition, RFC 6062 substitutes the TURN messages with TCP connections between TURN client **310** and TURN server **314.** The peer to whom the application data is destined is identified by the relayed transport address, which is the IP address and port on the TURN server **314,** as allocated by the TURN server **314** and sent to the TURN client **310.**

As used herein, a TURN server that has the extensions for TCP in accordance with IETF RFC 6062 is referred to as a "TCP TURN Server".

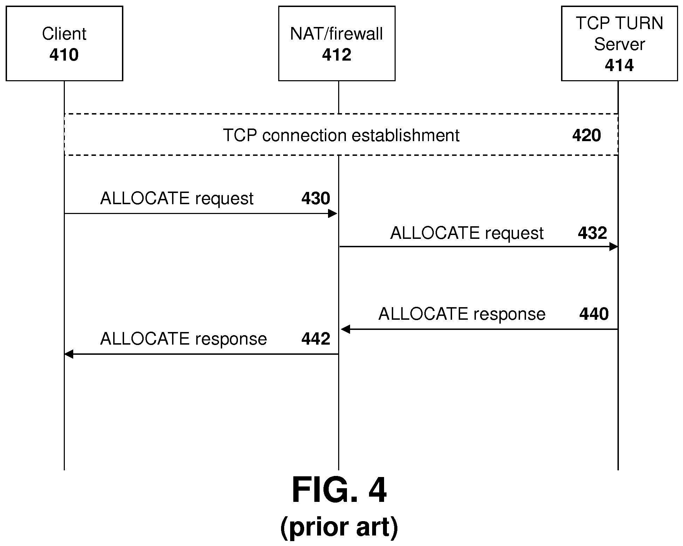

In order to create an allocation between a client and a TCP TURN Server, various messaging may be provided. Reference is now made to **Figure 4****.**

A TURN client **410** starts by establishing a control connection with TCP TURN server **414,** as shown by block **420** in **Figure 4****.** The control connection is made with the TCP TURN server's transport address, which may include a well-known TURN TCP port, such as port 3478.

Next TURN client **410** sends a TURN ALLOCATE request message, as shown by arrow **430,** to the NAT/firewall **412.** The TURN ALLOCATE request message is then forwarded to TCP TURN Server **414,** as shown by arrow **432.**

TCP TURN Server **414** authenticates TURN client **410** based on the message at arrow **432.** Various authentication protocols may exist and for example may be based on MD5 hashing functions. Other authentication methods would be however known to those in the art.

Assuming authentication succeeds, TCP TURN server **414** then allocates an IP address and a port for TURN client **410,** known as the "relayed transport address", and sends an ALLOCATE response message back to client **410,** indicating a successful allocation and containing the allocated relayed transport address. The ALLOCATE response message is shown by arrow **440** between TCP TURN server **414** and NAT/firewall **412,** and by arrow **442** between NAT/firewall **412** and TURN client **410.**

Once the allocation is completed on the TCP TURN server **414,** two operations are possible. These operations may occur any number of times and in any order for the duration of the allocation.

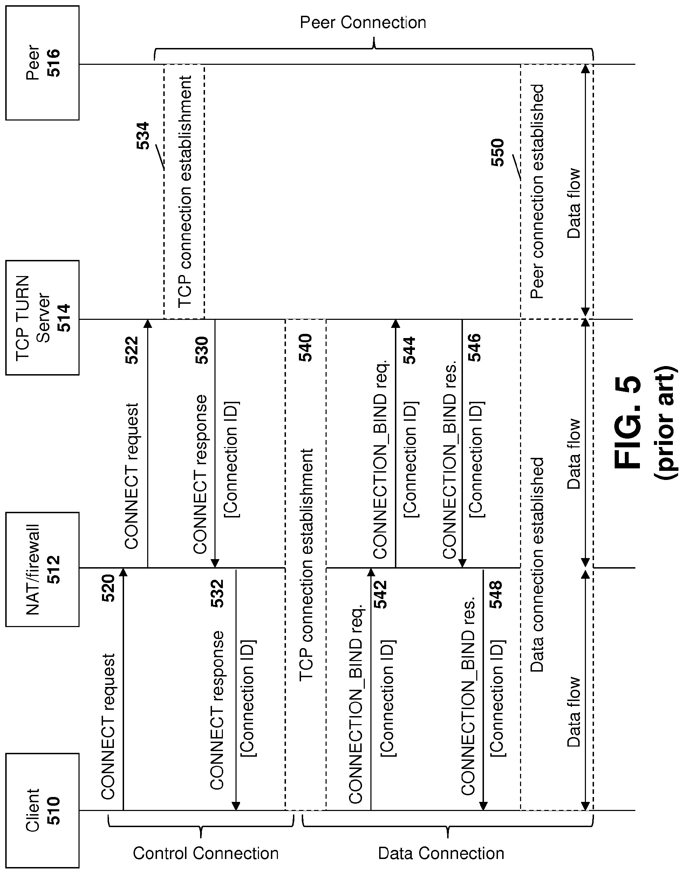

A first operation relates to the establishment of outbound TCP connections from a TURN client to a peer outside of the TURN client's network. Reference is now made to **Figure 5****.**

In order to establish an outbound connection, TURN client **510** utilizes the TCP TURN server **514** by sending a CONNECT request message over the control connection. The CONNECT request message contains the peer's outward facing IP address. Referring to **Figure 3****,** the outward facing IP address could be the host transport address of the Peer such as that of Peer **330** or could be the Server-Reflexive Transport Address, such as that provided by NAT/firewall **322,** depending whether the Peer is behind a NAT.

Thus, as seen in **Figure** 5, TURN client **510** communicates with a TCP TURN server **514** through a NAT/firewall **512.** TURN client **510** wishes to establish communications with a peer **516.**

The CONNECT request message, as described above is shown in **Figure 5** by arrows **520** and **522** between client **510** and NAT/firewall **512** and between NAT/firewall **512** and TCP TURN server **514** respectively.

Upon receiving the CONNECT request message at arrow **522,** TCP TURN server **514** establishes a TCP connection with peer **516,** as shown by block **534.** The connection is referred to hereinafter as a peer connection.

After successfully establishing a peer connection, TCP TURN server **514** assigns a connection ID (connection identifier) to the peer connection and sends back the connection ID in response to the CONNECT request to the TURN client **510.** The CONNECT response, with a connection ID, is shown with arrows **530** and **532** in the embodiment of **Figure 5****.**

TURN Client **510,** upon receiving the response at arrow **532,** then establishes another outbound TCP connection using a different source address (which may differ only by source TCP port), known as a "data connection" to the same transport address for TCP TURN server **514** as used in the control connection. This is shown with block **540** in the embodiment of **Figure 5****.**

TURN client **510** then sends a CONNECTION_BIND request message, containing the connection ID as received in the previous CONNECT response message, over the data connection to the TCP TURN Server **514.** This shown with arrows **542** and **544** in the embodiment of **Figure 5****.**

The TCP TURN Server **514** then sends a CONNECTION_BIND response message with the connection ID back to TURN Client **510** through NAT/Firewall **512,** as shown by arrows **546** and **548** in the embodiment of **Figure 5****.**

TCP TURN Server **514** then internally binds together the data connection established at block **540** and the peer connection established at block **534.** The binding is shown by block **550** in the embodiment of **Figure 5****.**

After the binding, no further TURN messages are sent on the data connection and just application data packets are provided. Packets received on the data connection from the TURN client **510** are relayed by the TCP TURN server **514** "as is" over the peer connection to the peer **516.** Similarly, packets received on the peer connection from the remote peer are relayed by the TCP TURN server **514** "as is" over the data connection to the TURN client **510.**

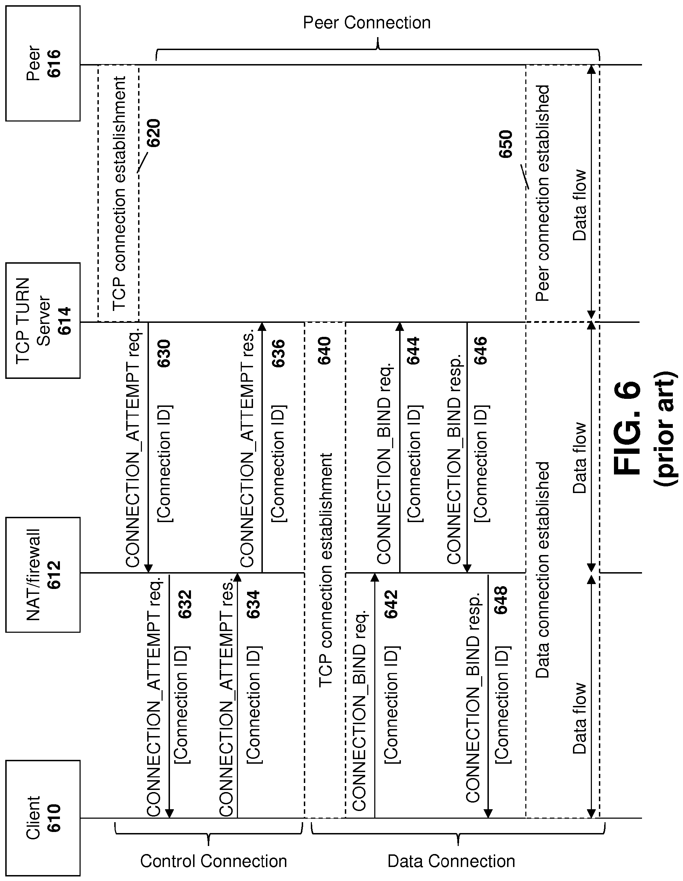

The second operation that may occur based on the ALLOCATION of **Figure 4** relates to the establishment of the TCP inbound connections to the TURN client from a peer outside of the TURN client's network. In other words, the peer wishes to make an outbound TCP connection to the TURN client. Reference is now made to **Figure 6****.**

In the embodiment of **Figure 6****,** a TURN client **610** has already established a control connection with a TURN server **614** and the TURN server **614** has allocated a relayed transport address for the TURN client **610.** Further, in the embodiment of **Figure 6****,** peer **616** wishes to establish a TCP connection with TURN client **610.**

In order to establish the TCP connection, peer **616** establishes a TCP connection to the TURN client **610**'s relayed transport address on TCP TURN server **614.** TCP TURN server **614** first accepts this TCP connection from peer **616,** referred to herein as a "peer connection" and shown by block **620** in **Figure 6****.** TCP TURN server **614** then checks the permissions to see if remote peer **616** is allowed to make a connection to the TURN client **610.** In other words, the check is made to determine whether the peer is allowed to send data to the TURN client's allocated relayed transport address on the TCP TURN server **614.**

If permission is granted, the TCP TURN server assigns a connection ID to the connection and sends the connection ID in a CONNECTION_ATTEMPT request message to TURN client **610.** Such message travels through NAT/firewall **614** and is shown by arrows **630** and **632** in the embodiment of **Figure 6****.**

TURN client **610** then sends back a CONNECTION_ATTEMPT response message to the CONNECTION_ATTEMPT request message, as shown by arrows **634** and **636** in the embodiment of **Figure 6****.**

If the connection attempt is accepted, TURN client 610 establishes an outbound TCP connection using a different source address (which may differ only by source TCP port), known as a "data connection", to the same transport address for TCP TURN server **614** as used in the control connection. This is shown with block **640** in the embodiment of **Figure 6****.**

TURN client **610** then sends a CONNECTION_BIND request message, containing the connection ID as received in the previous CONNECTION_ATTEMPT request message, over the data connection to TCP TURN server **614.** The CONNECTION_BIND request message which contains the connection ID travels through NAT/firewall **612** and is shown by arrows **642** and **644** in the embodiment of **Figure 6****.**

The TCP TURN server **614** then sends a CONENCTION_BIND response message with the connection ID through the NAT/firewall **612** to TURN client **610,** as shown by arrows **646** and **648** in the embodiment of **Figure 6****.**

The TCP TURN server **614** then internally binds together the data connection established at block **640** and the peer connection established at block **620.** The binding is shown by block **650** in the embodiment of **Figure 6****.**

After the binding, no further TURN messages are sent on the data connection and just application data packets are provided. Packets received on the peer connection from the remote peer are relayed by the TCP TURN server **614** "as is" over the data connection to the client. Similarly, packets received on the data connection from client **610** are then forwarded, "as is", over a peer connection to peer **616.**

With the embodiments of **Figures 5** and **6** above, a firewall may restrict TCP connections only to certain ports for security or privacy reasons, among other reasons. For example, only TCP port 80 (e.g. for HTTP) and port 443 (e.g. for HTTPS) may be allowed for outbound TCP connections in order to enable users to access the World Wide Web but nothing else. Ports 80 and 443 are however merely provided as examples and other ports could be enabled in addition or alternatively to these two example ports.

### Demilitarized Zone (DMZ) Network

In computer security, a DMZ, which is also referred to as perimeter networking, is a physical or logical sub-network (subnet) that contains and exposes an organization's external-facing services to a large un-trusted network such as the Internet. The purpose of a DMZ is to add an additional layer of security to an organization's local area network (LAN). An external attacker only has access to equipment in the DMZ, rather than any other part of the network.

As indicated above, any server running or residing on an IP node that resides on a first IP network may not be reachable by a second IP node that resides in a separate network where the separate network is connected to the network of the first node. In particular, running or hosting an SSL/TLS server on an IP node that resides on one or more restricted access IP networks may be desirable in order to reach the host securely. For example, the SSL/TLS server may be used for remote user file access to obtain files stored locally on the server. If the server is on a mobile device, then pictures, videos, music or ringtones stored on the device may be obtained using an SSL/TLS server on the device. Further, remote control of the device may be desired through an SSL/TLS connection. In this case, a user may see the screen of the mobile device, for example, from a browser running on another IP node such as a desktop PC.

An SSL/TLS server on a device may also be used to receive or terminate secure incoming voice or video over Internet Protocol calls.

In one embodiment, the first IP node may be a mobile device or other computing device such as a smartphone, PC, tablet/tablet computer, (USB) dongle, laptop, notebook, netbook, ultrabook, among others. Typically, but not always, such a device resides only on a mobile/cellular operator or carrier network such as a Global System for Mobile Communications (GSM) Enhanced Data rates for Global Evolution (EDGE) Radio Access Network (GERAN), Universal Terrestrial Mode System (UMTS) Terrestrial Radio Access Network (UTRAN), Enhanced UTRAN (E-UTRAN), code division multiple access (CDMA) network, CDMA 2000 network, among others.

Typically, but not always, wherein a cellular network offers a connection to an IP network, the IP network may be a restricted access IP network and thus it would disable or prohibit the IP node from being reachable by other IP nodes.

Some mobile devices may support wireless local area network (WLAN) technology in order to connect to a WLAN such as a hotspot. Typically, the WLAN owner may deploy the NAT function and/or a firewall function on the IP network provided by the WLAN, thus making the IP network provided by the WLAN a restricted access IP network.

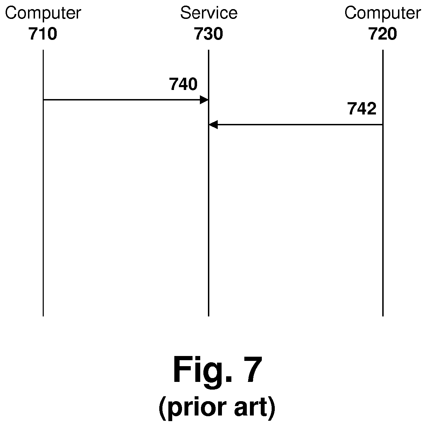

In accordance with one embodiment of the present disclosure, in order to establish a SSL/TLS session between one computer and another, an intermediary computer may be used. For example, in a chat setting a first computer may connect to a host and a second computer may also connect to the host. Reference is now made to **Figure 7****.**

As seen in **Figure 7****,** a first device **710** wishes to communicate with a second device **720** through a service **730.** Either of devices **710** or **720** may be behind a NAT or firewall. In order to provide such connection between the devices, device **710** may establish an outgoing SSL/TLS session with service **730** as shown by arrow **740.** Similarly, device **720** may establish an outgoing SSL/TLS connection with service **730** as shown by arrow **742.** If device **710** wishes to send a message to device **720,** the message is encrypted using a key shared between device **710** and service **730,** and is sent to service **730,** where service **730** then decrypts the message, finds the routing information, encrypts the message using a key shared between device **720** and service **730,** and forwards the information to device **720.**

Similarly, if device **720** wishes to send a message to device **710,** the message is encrypted using a key shared between device **720** and service **730,** and is sent to service **730,** which decrypts the message, finds the routing information, encrypts the message with a key shared between service **730** and device **710,** forwards the encrypted message to the device **710.**

As will be appreciated, such communications are not end-to-end secured . In this case, service **730** holds the key for communications between device **710** and service **730.** Further, service **730** holds a second key for communications between device **720** and service **730.** Every message sent from device **710** to device **720** is first decrypted by Service **730** and then encrypted by Service **730,** and vice versa. Service **730** knows every message sent between device **710** and device **720.**

Based on the above, in accordance with one embodiment of the present disclosure, an SSL/TLS connection is established between a first IP node acting as an SSL/TLS server and a second node acting as an SSL/TLS client. This SSL/TLS connection transits through a relay service node that is used to route IP data and traffic through a firewall/NAT entity.

In one embodiment, a first IP node resides only on a restricted access IP network and is running or hosting a SSL/TLS server. The first IP node is enhanced or modified to also run or host a relay agent, which communicates with a relay service node.

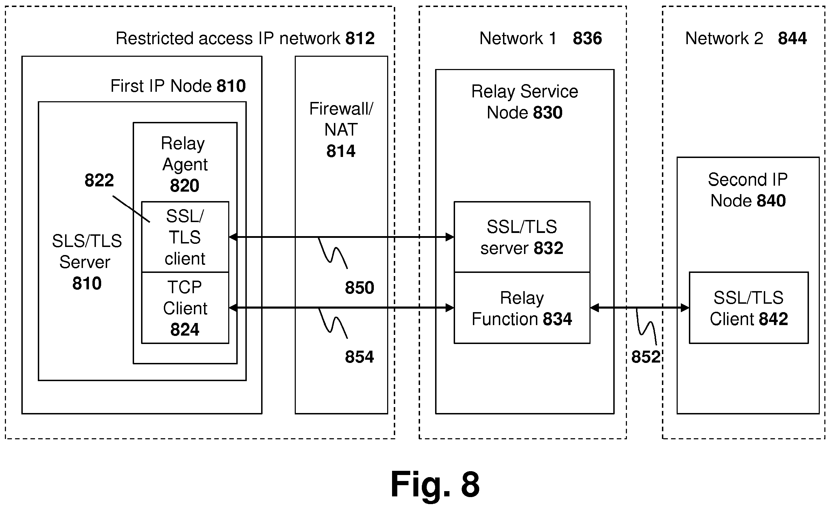

The relay service node resides on the public Internet and the whole system may work in accordance with the example of **Figure 8****.**

As seen in **Figure 8****,** a first IP node **810** is within a restricted access IP network **812** and behind a Firewall/NAT **814.**

A first IP node **810** includes an SSL/TLS server **816.** The SSL/TLS server includes a relay agent **820** consisting of an SSL/TLS client **822** and a TCP client **824.**

A relay service node **830** includes an SSL/TLS server **832** and a relay function **834** as described below. Relay service node **830** may be in a public or private network **836,** which may include the Internet, for example. A second IP node **840** includes an SSL/TLS client **842** and resides on a network 844 which may be a public or private network. In some embodiments the second IP node **840** may also be behind a NAT or firewall.

In the embodiment of **Figure 8****,** network **836** is reachable by both network **812** and network **844.** Network **844** may or may not be reachable by network **836.** Further, network **812** and network **844** may or may not be the same network.

Relay service node **830** listens and accepts incoming TCP connection requests on certain transport layer ports, where such transport layer ports are known to be allowed or not blocked by any function such as a NAT or firewall function in the restrictive IP network where the first IP node **810** resides.

Three types of connections may exist between the first IP node **810,** relay service node **830** and second IP node **840.** All three connection types utilize SSL/TLS, which in turn utilizes TCP.

As shown by arrow **850,** a first connection (referred to herein as *Connection Type I*) is established from the first IP node to the relay service node. The purpose of this connection is to carry control messaging between the first IP node **810** and the relay service node **830.**

A second connection (referred to herein as *Connection Type II*)*,* is shown by arrow **852** in the embodiment of **Figure 8****,** and is a connection established from the second IP node to the relay service **830.** The purpose of connection **852** is to carry application TCP traffic or data between the second IP node **840** and the first IP node **810** via the relay service node **830.** In some embodiments, the network that the second IP node **840** resides on may or may not be a restricted access network.

A third connection (referred to herein as *Connection Type III*)*,* is shown by reference numeral **854** and is a connection established from first IP node **810** to the relay service node **830.** The purpose of the connection **854** is to carry application TCP data and traffic between the first IP node and the second IP node via the relay service node **830.** Each connection is discussed in detail below.

The relay service node **830** associates or binds one or a plurality of fully qualified domain names (FQDNs) to the connection **850** and uses the associated or bound FQDN to reach the first IP node.

The relay service node **830** then extracts the associated or bound FQDN from the SSL/TLS server name indication (SNI) field of an incoming SSL/TLS ClientHello message on connection **852** from second IP node **840.** The relay server node **830** then buffers the SSL/TLS ClientHello message.

The relay service node **830** next sends a control message over connection **850** to IP node **810** to notify of the pending connection from second IP node **840.**

Upon receiving the control message from the relay service node **830,** the first IP node **810** establishes a connection **854** to the relay service node **830** and indicates to the relay service node which connection **842** to bind connection **854** with.

Upon accepting the connection **854** and receiving an indication from the first IP node, relay service node **830** binds connection **854** with connection **852** and then sends the buffered ClientHello message to the first IP node **810** over connection **854.**

The relay service node **830,** once the binding is successfully established, then relays, forwards, proxies or redirects application TCP traffic or data between the first IP node and the second IP node via connections **852** and **854.**

Based on the above, the solution therefore allows for a first IP node **810,** while residing in restricted access IP network, to be reachable by other IP nodes that reside out of the restricted IP network where the first IP network currently resides, without changing the settings or configuration of the Firewall/NAT **814** and further preserving end to end SSL/TLS security.

As will be appreciated by those in the art, relay service node **830** may service a plurality of first IP nodes **810** and second IP nodes **840** on a plurality of networks. Some of these networks may be restricted and others may not be. The relay service node **830** may use one or a plurality of ports that are allowed by the restricted access IP networks.

Details of the above are provided below.

### SSL/TLS Server Relay Service Node Initialization

In one embodiment, relay service node **830** resides on the public Internet and listens on either one or a set of TCP ports noted as *PS* = {*p*1, *p*2, ... *pn*} which is or are allowed by restrictive access network.

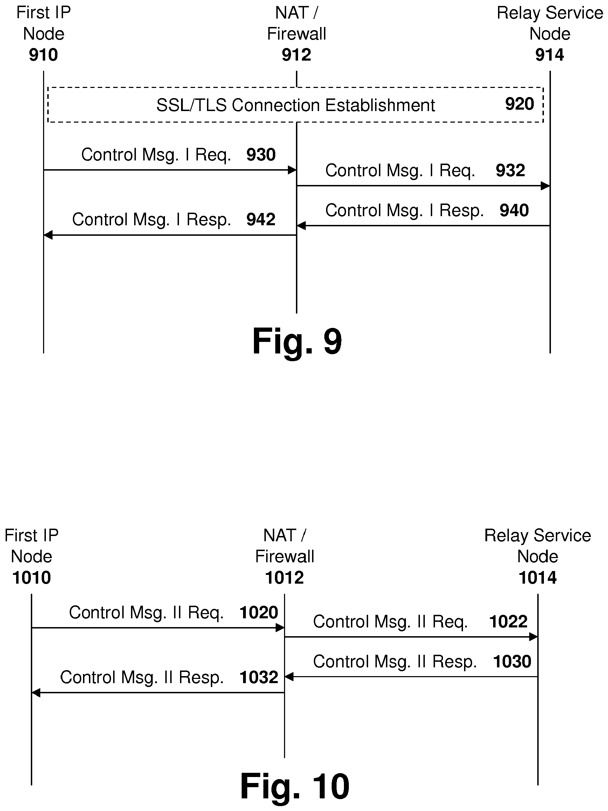

In order to establish the Connection Type I (connection **850** from the embodiment of **Figure 8****),** reference is now made to **Figure 9****.**

As seen in **Figure 9****,** first IP node **910** communicates through NAT Firewall **912** with relay service node **914.** First IP node **910** behind NAT Firewall **912** acts as an SSL/TSL server and establishes an outbound SSL/TLS connection to relay service node **914,** as shown by reference numeral **920.**

If the connection is successfully established then the first IP node **910** sends a first control message (referred to herein as *Control Message I*)*,* as shown by reference numeral **930,** to NAT/Firewall **912.** NAT/Firewall **912** then forwards the message, as shown by reference numeral **932,** to relay service node **914.**

Upon receiving the control message at reference numeral **932** from the first IP node **910,** relay service node **914** associates a fully qualified domain name or a plurality of FQDNs with the first IP node **910.** Two options are provided in the present disclosure.

In the first option, the Relay Service Node **914** can assign an FQDN or a set of FQDNs to the First IP Node **910,** and for each FQDN the Relay Service Node **914** can create an entry in a DNS server to map said FQDN with the IP address of the Relay Service Node **914.** The entry in the DNS server is referred to as a "DNS A record" in some embodiments.

In a second option, the First IP Node **910** provides an FQDN or a set of FQDNs to the Relay Service Node **914** and creates an entry in a DNS server such as an DNS "A" record to map the FQDN(s) to the Relay Service Node's IP address for each of the FQDNs.

In both options the Relay Service Node also returns a port *p* from *PS, p* ∈ *PS* to the First IP Node in the response of *Control Message I* of arrows **930** and **932.** In one embodiment, port p may be HTTPS port 443 in order to support a browser as an SSL/TLS client.

In response to the receipt of *Control Message I* at arrow **932,** relay service node **914** sends a *Control Message I* response back to first IP node **910,** as shown by reference numerals **940** and **942.**

In one embodiment, since the relay node functionality consumes bandwidth and CPU resources, the use of the relay node by the first IP node **910** may be authenticated, for example, through a user name and password and the connection **920** messaging may be secured using SSL/TLS.

In one embodiment, the first IP node **910** may advertise its FQDN or set of FQDNs and the port *p* to other IP nodes through out-of-band mechanisms.

### Keep-alive Procedure

The first IP node needs to periodically send a *Control Message II* to refresh the binding between the FQDN and the *Connection Type I* (e.g. first connection **850** from **Figure 8****)** in order that the relay service node can detect any unexpected disappearance of the first IP node. For example, the first IP node may disappear if it loses power. *Control Message II,* as used herein, is used for refreshing the binding on a *Connection Type I.*

*Control Message II* also serves as a NAT keep alive function in order to retain the NAT bindings in the NAT Firewall. Thus, in some embodiments if the relay service node does not receive a *Control Message II* from the first IP node for a certain period of time, the relay service node will terminate the associated connection **850** between the first IP node and the relay service node.

Reference is now made to **Figure 10. Figure 10****,** the first IP node **1010** communicates through NAT Firewall **1012** with relay service node **1014.**

First IP node **1010** may periodically send a keep-alive message in the form of a *Control Message II* request, as shown by reference numerals **1020** and **1022** to relay service node **1014.**

In response, relay service node **1014** sends a *Control Message II* response, as shown by reference numerals **1030** and **1032.**

### SSUTLS client established communications

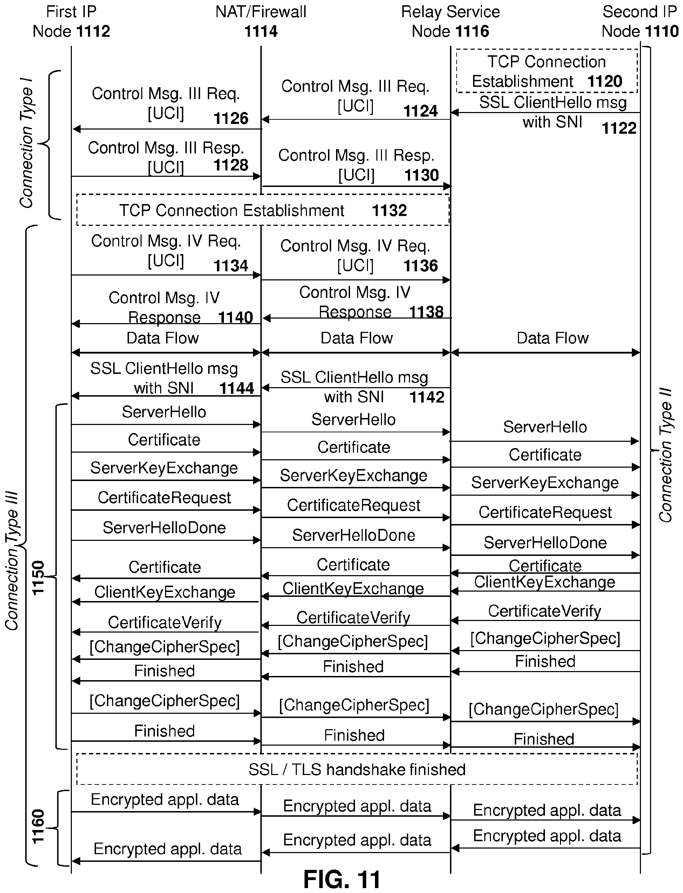

Reference is now made to **Figure 11****,** which shows a Second IP Node **1110** trying to establish an SSL/TLS connection with a First IP Node **1112.** The First IP Node **1112** is behind a NAT/Firewall **1114** and the communication for the SSL/TLS uses a Relay Service Node **1116** as described below.

In order to establish the communication, a Second IP Node **1110** performs a DNS "A" record resolution of the FQDN of the First IP Node and then establishes a TCP connection to the IP address of the Relay Service Node **1116** resulting from the DNS "A" record resolution and the destination port p learned from the First IP Node. The TCP connection establishment is shown in **Figure 11** with the reference numeral **1120.**

Once the TCP connection is accepted by Relay Service Node **1116,** the Second IP Node **1110** starts the SSL/TLS handshake procedure as described above by sending an SSL/TLS ClientHello message with an SNI value, as shown by reference **1122** in **Figure 11****.** The SNI value of the ClientHello message **1122** is the same as the FQDN of the First IP Node. The connection from the Second IP Node **1110** to the Relay Service Node **1116** is designated as *"Connection Type II"* and Relay Service Node **1116** internally assigns a unique connection identifier (UCI) for this *Connection Type II.*

Upon receiving the SSL/TLS ClientHello message, Relay Service Node **1116** checks the SNI value of the ClientHello message **1122.** If the SNI value is present, the Relay Service Node **1116** checks if there is a *"Connection Type I"* from the First IP Node **1112** associated with the SNI value. If there is, Relay Service Node **1116** sends a *"Control Message III"* request over the associated *Connection Type I* to notify the First IP Node **1112** that there is a pending connection. Such message is shown with reference numerals **1124** and **1126** for the *Control Message III* request as well as messages **1128** and **1130** for the *Control Message III* response. Messages **1128** and **1130** are sent by the First IP Node **1112** upon receiving the *Control Message III* request from the Relay Service Node **1116** and are used to acknowledge the receipt of the Control Message III request. Messages **1128** and **1130** are sent over *Connection Type I.* Relay Service Node **1116** buffers the ClientHello message internally **1122.**

The First IP Node **1112** then makes a new *Connection Type III* connection to the Relay Service Node **1116,** as shown by block **1132.** The *Connection Type III* may be an unsecured TCP connection, for example.

The First IP Node **1112** then sends a binding message (*Control Message IV*) over the *Connection Type III* to bind the *Connection Type II* and *Connection Type III* together. The *Control Message IV* includes the same UCI included in the *Control Message III.* Such request is shown with messages **1134** and **1136** in the example of **Figure 11****.**

After receiving the *Control Message IV* over the *Connection Type III* from the First IP Node **1112,** the Relay Service Node **1116** binds the *Connection Type II* and *Connection Type III* together, using the UCI received in the *Control Message IV* and then sends back a *Control Message IV* response to the First IP Node **1112,** as shown by messages **1138** and **1140.**

The Relay Service Node **1116** then sends the buffered *ClientHello* message from message **1112** over the *Connection Type III* to the First IP Node **1112,** as shown by messages **1142** and **1144.**

From this point on, all traffic from the First IP Node **1112** to the Relay Service Node **1116** over *Connection Type III* is relayed "as is" to the Second IP Node **1110** over the bound *Connection Type II* by the Relay Service Node. Similarly, all traffic sent from the Second IP Node **1110** to the Relay Service Node **1116** over *Connection Type II* is relayed "as is" to the First IP Node **1112** over the bound *Connection Type III* by the Relay Service Node **1116.**

Further, in the example of **Figure 11****,** the handshaking as described above with regard to **Figure 1** is then performed based on the binding and is shown in general with reference numeral **1150.**

Once the handshaking is finished, encrypted application data can be sent between First IP Node **1112** and Second IP Node **1110,** shown in general by reference numeral **1160** in the example of **Figure 11****.**

The operation continues until the Relay Service Node **1116** detects the termination of the *Connection Type III,* whereupon it terminates the bound *Connection Type II.* Similarly, whenever the Relay Service Node **1116** detects the termination of *Connection Type II,* it terminates the bound *Connection Type III.*

With regard to **Figure 11****,** the Second IP Node **1110** may also in some embodiments reside in a restricted access IP network and may also have a NAT/Firewall between it and the Relay Service Node **1116.**

From **Figure 11****,** the SSL/TLS handshake is performed between the First IP Node and the Second IP Node, and SSL/TLS traffic between the First IP Node **1112** and the Second IP Node **1110** is transparent to the Relay Service Node **1116,** thus preserving end-to-end SSL/TLS security between the First IP Node **1112** and the Second IP Node **1110.**

All connections, including *Connection Type I, Connection Type II* and *Connection Type III* are SSL/TLS connections. From the point of view of the Relay Service Node **1116,** *Connection Type I* is an SSL/TLS connection terminated at the Relay Service Node **1116** while *Connection Type II and Connection Type III* are just normal unsecured TCP connections.

As defined above, a *Control Message I* is a message that serves a purpose to request the Relay Service Node **1116** to bind an FQDN or plurality of FQDNs to the First IP Node **1112.**

A *Control Message II* is a message that refreshes the binding of *Control Message I.*

Control Message III is a message that notifies the First IP Node 1112 of a pending SSL/TLS connection from the Second IP Node 1110 by a Relay Service Node 1116.

Connection Message IV is a message that serves the purpose to request to Relay Service Node 1116 to bind the Connection Type III and Connection Type II, and is sent over a Connection Type III.

Control Messages I, II, and III are sent over Connection Type I, which is secured by SSL/TLS.

### Security Considerations

The purpose of SSL/TLS is to provide trusted and end-to-end secured service over TCP. In accordance with the present disclosure, additional elements and details are provided in order to traverse NAT/Firewall. In order to preserve end-to-end SSL/TLS security, messages 1124 to 1140 need to be fully secured. In order to accomplish this, the following mechanisms may be adopted.

The Connection Type I between the First IP Node 1112 and Relay Service Node 1116 is an SSL/TLS connection.

Further, the Unique Connection Identifier (UCI) sent from Relay Service Node 1116 to First IP Node 1112 in message 1124 and 1126 is random and unpredictable.

Further, all Control Messages I, II, III and IV between the First IP Node 1112 and the Relay Service Node 1116 are protected by the long-term credential mechanism described in Section of 10.2 of IETF RFC 5389 "Session Traversal Utilities for NAT (STUN)", October 2008.

### Section 10.2 of RFC 5389 indicates:

The long-term credential mechanism relies on a long-term credential, in the form of a username and password that are shared between client and server. The credential is considered long-term since it is assumed that it is provisioned for a user, and remains in effect until the user is no longer a subscriber of the system, or is changed. This is basically a traditional "log-in" username and password given to users because these usernames and passwords are expected to be valid for extended periods of time, replay prevention is provided in the form of a digest challenge. In this mechanism, the client initially sends a request, without offering any credentials or any integrity checks. The server rejects this request, providing the user a realm (used to guide the user or agent in selection of a username and password) and a nonce. The nonce provides the replay protection. It is a cookie, selected by the server, and encoded in such a way as to indicate a duration of validity or client identity from which it is valid. The client retries the request, this time including its username and the realm, and echoing the nonce provided by the server. The client also includes a message-integrity, which provides an HMAC over the entire request, including the nonce. The server validates the nonce and checks the message integrity. If they match, the request is authenticated. If the nonce is no longer valid, it is considered "stale", and the server rejects the request, providing a new nonce.

In one embodiment, the Relay Service Node **1116** also maintains a timer while waiting for *Control Message IV* from the First IP Node **1112.** Thus, while sending the *Control Message III* at message **1124,** Relay Service Node **1116** starts a timer. If a *Control Message IV* is not received by the time the timer has expired, the Relay Service Node **1116** terminates the TCP connection accepted in block **1120** from Second IP Node **1110.** The Relay Service Node may also terminate the TCP connection accepted at block **1132** from First IP Node **1112.**

### Variations

While the above examples with regard to **Figures 9, 10** and **11** show one embodiment, variations are possible. For example, it is assumed that Relay Service Node **1116** listens on at least HTTP port 80 and HTTPS port 443 since most enterprise networks allow outbound TCP connections on these ports. However, local firewall policy may allow a different port or ports. If the Second IP Node **1110** makes an SSL/TLS connection from the browser, the Relay Service Node **1116** may use HTTPS port 443 to accept the *Connection Type II.* However, the above does not specify which port or ports the Relay Service Node **1116** listens to for *Connections Type I* and *Connections Type III* messages. Four variations are described below.

### Connection Type II and III share port 443 and Connection Type I uses port 80

In this embodiment, *Connection Type I* is accepted on port 80 and is an SSL/TLS connection terminated on the Relay Service Node **1116.** *Connection Type II* and *Connection Type III* are normally unsecured TCP connections accepted on port 443, and then become an SSL/TLS connection between the First IP Node **1112** and the Second IP Node **1110.** The Relay Service Node **1116** checks the first message on the normal unsecured TCP connection accepted on port 443 to determine the connection type as described below,

If the first message is *Control Message IV,* then the connection is a *Connection Type III.*

However, if the first message is an SSL/TLS ClientHello message and the SNI is present in the ClientHello message, then the Relay Service Node **1116** tries to find the corresponding *Connection Type I.* If there is a matched *Connection Type I,* then this connection becomes a *Connection Type II,* and the Relay Service Node **1116** forwards the ClientHello message to the First Node **1112** as described above with regard to **Figure 11****.**

Otherwise, the Relay Service Node terminates the TCP connection.

From the above, no changes are necessary to an SSL/TLS library such as openSSL.

### Connection Type I and II share port 443 and Connection Type III uses port 80

In this variant, *Connection Type I* is accepted on port 443 and is an SSL/TLS connection terminated on the Relay Service Node **1116.** *Connections Type II* and *Type III* are normal unsecured TCP connections accepted on port 443 and port 80 respectively. These connections become an SSL/TLS connection between the First IP Node **1112** and the Second IP Node **1110.** The first message on the connection accepted on port 443 is the SSL/TLS ClientHello message. The Relay Service Node **1116** checks the SNI presence in the ClientHello message to determine the connection type as described below.

If the SNI is not present in the ClientHello message, or the SNI matches the Relay Service Node's own FQDN, this connection becomes a *Connection Type I,* and the Relay Service Node **1116** handles the SSL/TLS handshake locally.

Otherwise, if there is a matched *Connection Type I* corresponding to the SNI value, and this SNI value does not match the Relay Service Node's own FQDN, the connection becomes a *Connection Type II,* and the Relay Service Node **1116** will relay the ClientHello message to the corresponding First IP Node **1112** described above with regard to **Figure 11****.**

If the Relay Service Node **1116** cannot find the matched *Connection Type I,* the Relay Service Node terminates the TCP connection immediately.

The above may require some modification to SSL/TLS libraries such as openSSL.

### One port

In this embodiment, all *Connection Type I, II* and *III* share one port. Since the browser only uses port 443 for HTTPS, port 443 may be chosen. However, this is not limiting and other ports could be chosen.

*Connection Type I* is an SSL/TLS connection terminated on the Relay Service Node **1116.** *Connections Type II* and *Type III* are normal unsecured TCP connections, and then become an SSL/TLS connection between the First IP Node **1112** and the Second IP Node **1110.** The Relay Service Node **1116** determines the connection type based on the first message over the connection in accordance with the following.

If the first message is *Control Message IV,* then the connection is a *Connection Type III.*

If the first message is the ClientHello message and there is no SNI present in the ClientHello or the SNI matches the Relay Service Node's own FQDN, then the connection is a *Connection Type I.*

If the first message is a ClientHello message, and the SNI matches one of the *Connection Type I,* then the connection is a *Connection Type II.*

Some modification may be needed in this embodiment for an SSL/TLS library such as openSSL.

### Three or more ports

If a firewall policy allows outgoing TCP connections to three or more TCP ports, then the connection type may be determined solely by the port. For example, if the Relay Service Node **1116** listens on three ports *p₁*, *p*₂ and *p₃* the Relay Service Node **1116** could assign the incoming connections *Connection Type I, II* and *III* for TCP on ports *p₁, p₂* and *p₃* respectively. One advantage of this approach is that there is no need to change the SSL/TLS library.

### SSL/TLS server adaption

In a further embodiment, the SSL/TLS server acts as a client of the Relay Service Node, referred to as the Relay Agent. The Relay Agent provides the following functionalities on behalf of the SSL/TLS server in order to interact with the Relay Service Node:

Establish and maintain an SSL/TLS *Connection Type I* to the Relay Service Node to send/receive *Control Message I, II* and *III* both to and from the Relay Service Node;

Establish and maintain a TCP *Connection Type III* to the Relay Service Node and send *Control Message IV* over this connection. All application traffic is sent or received over this Connection Type III to or from the Relay Service Node.

### Built-in Relay Agent of the SSUTLS Server

If the source code of the SSL/TLS server is accessible, then the Relay Agent can be a module of the SSL/TLS server as illustrated in **Figure 8** above.

When the SSL/TLS server starts, the built-in Relay Agent follows the procedure described above to bind the FQDN or a plurality of FQDNs to the SSL/TLS Server. After the initialization procedure is finished, the built-in Relay Agent also follows the keep-alive procedures described above to refresh the bindings.

Whenever an SSL/TLS client wants to connect the SSL/TLS server, the SSL/TLS client makes a TCP connection to the Relay Service Node followed by a ClientHello message with the SNI value set as the SSL/TLS Server's FQDN. The Relay Service Node then sends a *Control Message III* to the Relay Agent of the SSL/TLS server. The Relay Agent then makes a new TCP connection (*Connection Type III*) to the Relay Service Node, sends a *Control Message IV* to the Relay Service Node whereupon the Relay Service Node sends a response to the Relay Agent and upon receiving the response the Relay Agent upgrades the TCP connection which normally is unsecured TCP to an SSL/TLS connection.

The above may be implemented using the following code in openSSL library, as provided in **Table 1** below.

| |
|---|
| *mSocket = createSocket()* ; // create a socket/TCP connection to the Relay |
| Service Node |
| *sendControlMessageIV(mSocket);* // send Control Message IV to the Relay |
| Service Node |
| waitControlMessageIVResponse(); |
| mSSL = SSL_new(mSSLContext); // creates a SSL connection |
| mSSLBIO = BIO_new_socket(mSocket, BIO_NOCLOSE) |
| SSL_set_bio(mSSL, mSSLBIO, mSSLBIO) |
| *SSL_set_accept_state(mSSL)* // upgrade TCP connection to SSL/TLS connection |
| SSL_do_handshake(mSSL) // starts handshake |

### TABLE 1: Code for Relay Agent

### Relay Service Front End

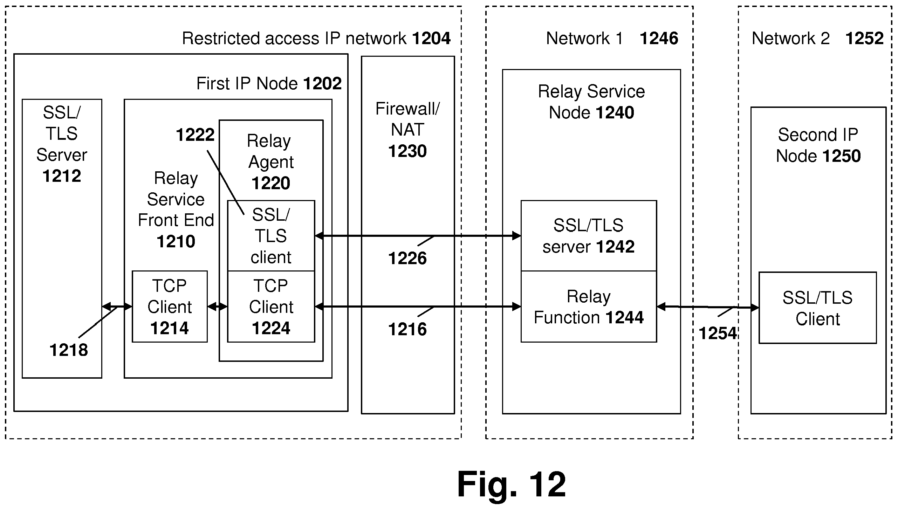

If the source code of the SSL/TLS server is not accessible, then a back-to-back Relay Agent/TCP client may be put in front of the SSL/TLS server. Reference is now made to **Figure 12****.**

As illustrated in **Figure 12****,** within a First IP Node **1202,** a Relay Service Front End **1210** is placed before the SSL/TLS service **1212.** Relay Service Front End **1210** functions as a Relay Service Node client on the Firewall/NAT side, and as a TCP client to the SSL/TLS server on the SSL/TLS server side.

When the Relay Service Front End **1210** starts, it follows the initialization procedures described above to bind the FQDN or a plurality of FQDNs to the SSL/TLS Server **1212.** After the initialisation procedure is completed, the Relay Service Front End **1210** also follows the keep-alive procedures described above to refresh the binding.

As illustrated in **Figure 12****,** Relay Service Front End **1210** includes a TCP client **1214** for the connection with the SSL/TLS server **1212.** Relay Service Front End **1210** also includes a relay agent **1220** which includes an SSL/TLS client **1222** to establish a *Connection Type* 1 **1226** with Relay Service Node **1240,** as well as a TCP client **1224.**

The NAT/Firewall **1230** for restricted access IP Network **1204** is then between the relay service front end **1210** and the Relay Service Node **1240.** Relay Service Node **1240** is on Network 1 **1246** and includes an SSL/TLS server **1242** as well as a relay function **1244.**

Thus, when a Relay Service Node **1240** sends a *Control Message III* to the Relay Service Front End **1210,** the following procedure may occur:
a. The Relay Service Front End **1210** makes a new *TCP Connection Type III,* shown with reference numeral **1216,** to the Relay Service Node **1240.**
b. The Relay Service Front End **1210** then sends a *Control Message IV over* the TCP connection **1216.**
c. The Relay Service Front End then makes another TCP connection **1218** to the SSL/TLS server **1212.**
d. Upon receiving a *Control Message IV* indicating a successful response from the Relay Service Node **1240,** the Relay Service Front End **1210** binds the *Connection Type III* **1216** from the Relay Service Front End **1210** to the Relay Service Node **1240** and the TCP connection **1218** from the Relay Service Front End **1210** to the SSL/TLS **1212** server together.

From this point on, the Relay Service Front End **1210** relays packets from the *Connection Type III* to the TCP connection to the SSL/TLS server, and vice versa.

Whenever a *Connection Type III* **1216** between the Relay Service Front End **1210** and Relay Service Node **1240** is terminated, the Relay Service Front End **1210** terminates the bound TCP connection **1218** to the SSL/TLS server **1212,** and vice versa.

In this case, the SSL handshake is handled by the SSL/TLS server **1212** instead of the Relay Service Front End **1210.** The SSL/TLS traffic between SSL/TLS server **1212** and SSL/TLS Client on Second IP Node **1250** then becomes transparent to Relay Service Front End **1210.**

Otherwise, second IP node **1250** on a second network **1252** communicates in a similar manner to that described above with regard to **Figure 11** over a *Connection Type II* **1254**

### DNS setup

As described in the various embodiments above, the Relay Service Node checks the presence of an SNI value in the SSL/TLS ClientHello message and associates the First IP Node with the SNI value. Currently, only DNS host names are supported server names.

Whether the DNS must setup properly in order to match the SNI value of the First IP Node to the IP address of the Relay Service Node depends on how the Second IP Node initiates the TCP connection to the IP address of the Relay Service Node. If the Second IP Node is a browser or makes a TCP connection via a browser, then the DNS needs to be setup properly to match the SNI value to the IP address of the Relay Service Node. Otherwise, the setup of the DNS is not necessary. In the latter case, the Second IP Node merely needs to make a TCP connection to the IP address of the Relay Service Node and sets up the SNI value in the SSL/TLS ClientHello message to the FQDN of the First IP Node via the SSL library when starting the SSL/TLS handshake.

### Example implementation using STUN/TURN

In one embodiment, STUN/TURN may be used to implement the above. STUN/TURN are a well adopted suite of standards for NAT traversal. They define a message format and authentication methods, consider possible attacks and provide recommended practice in mitigating attacks in real world deployments.

The mapping between the connection type defined in the embodiments above and the TURN-TCP RFC 6062 is provided in **Table 2** below.

**TABLE 2: Mapping of Connection Type**

| Connection Type | TURN-TCP connection |
|---|---|
| Connection Type I | Control Connection |
| Connection Type II | Peer Connection |
| Connection Type III | Data Connection |

The mapping between control messages defined in the embodiments above and the TURN messages is listed below in **Table 3.**

**TABLE 3: Mapping of Message Type**

| Message | TURN-TCP message |
|---|---|
| Control Message I | ALLOCATE |
| Control Message II | REFRESH |
| Control Message III | CONNECTION_ATTEMPT |
| Control Message IV | CONNECTION_BIND |

As seen from **Table 2** and **Table 3** above, each connection type may be mapped to a TURN-TCP connection and further each message type may be mapped to a TURN-TCP message.

However, unlike TURN-TCP, the embodiments above do not allocate a port for each SSL/TLS server behind the NAT/Firewall. Instead, the FQDN is associated with an SSL/TLS server. The matched SSL/TLS server is found based upon the SNI value in the ClientHello message from the SSL/TLS client.

Thus, STUN/TURN is one option to implement the above embodiments. However, other options are possible.

### Mobile Device Implementation

One possible implementation is the case where the First IP Node is a mobile computing device such as a smart phone or tablet. In this case, battery consumption may be a consideration. Further, in some platforms, limitations may exist for running background services such as SSL/TLS Servers and in some cases may not even be possible.

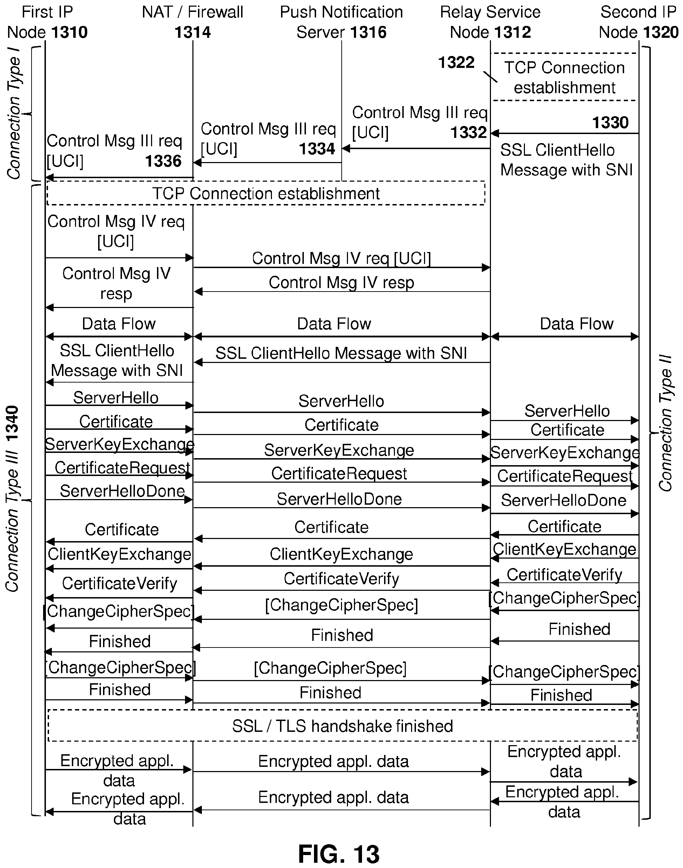

Mobile platforms currently support push notification channels that are persistent SSL/TLS connections to a push notification server running on the public Internet. In one embodiment of the present disclosure, existing push notification channels may be utilized to receive *Control Message III* from Relay Service Nodes via the push notification server. One example of such a procedure is provided below with regard to **Figure 13****.**

Referring to **Figure 13****,** a First IP Node **1310** establishes an SSL/TLS connection to the Relay Service Node **1312** asking the Relay Service Node **1312** to associate a fully qualified domain name or set of fully qualified domain names with the First IP Node **1310.** In the embodiment of **Figure 13****,** a First IP Node **1310** is behind NAT/Firewall **1314** and further a Push Notification Server **1316** may be utilized, as described below.

After receiving a successful response to the association of the fully qualified domain name, the first IP node **1310** can terminate the SSL/TLS connection established above. In order to refresh the association between an FQDN or set of FQDNs with the First IP Node **1310,** the First IP Node could establish a new SSL/TLS connection to the Relay Service Node **1312.**

A First IP Node **1310** sends a *Control Message II* and terminates the SSL/TLS connection after receiving the response for *Control Message II.* Therefore, no persistent SSL/TLS connection between the First IP Node **1310** and Relay Service Node **1312** exists, thereby saving battery consumption on the mobile device.

Whenever a Second IP Node **1320** wants to make an SSL/TLS connection to the First IP Node **1310,** the following procedure could be followed.

The Second IP Node **1320** may first perform a DNS A record resolution of the FQDN of the First IP Node **1310** and establish a TCP connection to the IP address of the Relay Service Node **1312** from the result of the DNS A record resolution and destination port p learned from the First IP Node **1310.** The TCP connection is shown with reference to block **1322** in the embodiment of **Figure 13****.**

Once the TCP connection is established, the Second IP Node 1320 starts the SSL/TLS handshake procedure provided above with regard to **Figure 1** or **Figure 2** by sending an SSL/TLS ClientHello message with an embedded SNI value. The SNI value of the ClientHello message is the same as the FQDN of the First IP Node **1310.** This connection from the Second IP Node **1320** to the Relay Service Node **1312** is a *Connection Type II,* and the Relay Service Node **1312** internally assigns a unique connection identifier for each TCP *Connection Type II* to identify a particular connection.

The ClientHello message is shown in **Figure 13** with reference numeral **1330.**

The Relay Service Node **1312** then sends a *Control Message III* to Push Notification Server **1316,** as shown by message **1332** in the embodiment of **Figure 13****.** Push Notification Server **1316** then relays the message to the First IP Node **1310** over push notification channel, as shown by messages **1334** and **1336.**

The remaining procedure is the same as that provided above with regard to **Figure 11** and the messages are sent over a *Connection Type III* and are shown in general with reference numeral **1340** in the embodiment of **Figure 13****.**

From the above, the First IP Node **1310** does not need to maintain a separated persistent SSL/TLS *Connection Type I* with the Relay Service Node **1312.**

Further, the Relay Service Front End can be used to provide a framework for a third party application developer to develop applications with end-to-end SSL/TLS security. The third party application developers need only design a standalone SSL/TLS server while the Relay Service Front End can handle all interactions with Relay Service Node. Here each mobile device can be assigned a unique domain name in order to route incoming traffic to different applications on the same device. Each application can have a different DNS name or SNI value under the same DNS of the device. For example, if a developer designs two applications, one for sharing files on the mobile device and one for text chat on the mobile device, it may be possible to assign two DNS/SNI values for the two applications. The Relay Service Front End could then route traffic to different applications based on the SNI value of the SSL/TLS ClientHello message.

The SSL/TLS handshake is handled by the application instead of the Relay Service Front End and thus maintains end-to-end SSL/TLS security.

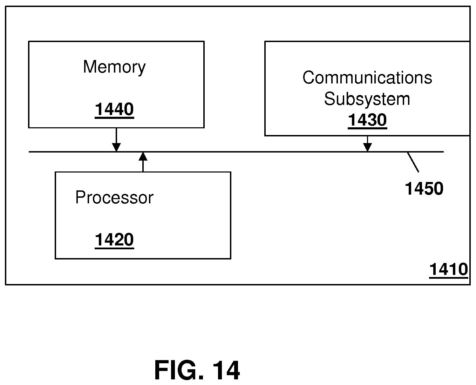

The nodes, peers, servers, clients and NATs, in the embodiments of **Figures 1** to **13** above can be any computing device or network element, or part of any computing device or network element, including various network servers. Reference is now made to **Figure 14****,** which shows a generalized computing device, which may comprise a computing client, server, peer computing device, NAT, among others.

In **Figure 14****,** computing device **1410** includes a processor **1420** and a communications subsystem **1430,** where the processor **1420** and communications subsystem **1430** cooperate to perform the methods of the embodiments described above.

In particular, computing device **1410** may be any computer or server, and can include, for example, a network based server, a personal computer, a combination of servers, a mobile device, a tablet computer, a laptop computer, among others.

Processor **1420** is configured to execute programmable logic, which may be stored, along with data, on computing device **1410,** and shown in the example of **Figure 14** as memory **1440.** Memory **1440** can be any tangible storage medium.

Alternatively, or in addition to memory **1440,** computing device **1410** may access data or programmable logic from an external storage medium, for example through communications subsystem **1430.**

Communications subsystem **1430** allows computing device **1410** to communicate with other network elements, such as a client computer through a NAT, a peer, a client or a server, depending on the function of computing device **1410.** Examples of protocols for communication subsystem **1430** include Ethernet, WiFi, cellular, WiLAN, among others.

Communications between the various elements of computing device **1410** may be through an internal bus **1450** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a relay service node (1116) to facilitate establishment of a secure connection between a first node (1112) within a restrictive access network (1114), and a second node (1110), the method comprising:
accepting a control connection (920) from the first node (1112);
following the accepting of the control connection (920) and receiving (932) a control message from the first node (1112) to request the relay service node (1116) to associate a fully qualified domain name with the first node (1112), associating a fully qualified domain name with the first node (1112), wherein the control message received at the relay service node (1116) provides the fully qualified domain name from the first node (1112) to the relay service node (1116);
accepting a second connection (1120) from the second node (1110), and receiving, over the second connection (1120), a message (1122) requesting secure connection establishment with the first node (1112), the message (1122) requesting secure connection establishment also providing the fully qualified domain name, FQDN, for the first node (1112), the message received over the second connection (1120) is a secure socket layer ClientHello message (1122) having a server name indication, SNI, with a value of the fully qualified domain name for the first node (1110) and wherein the relay service node extracts the FQDN for the first node from the server name indication field of the secure socket layer ClientHello message (1122);
in response to determining that the fully qualified domain name provided by the message (1122) requesting secure connection establishment matches to the first node (1112), using the fully qualified domain name for the first node (1112) provided by the message (1122) requesting secure connection establishment with the first node (1112) and a transmission control protocol port allowed by the restrictive access network (1114) to reach the first node (1112) and establish a secure sockets layer/transport layer security, SSL/TLS, connection with the first node (1112), the establishment comprising:
sending (1124), over the control connection (920), a connection attempt request to establish a third connection (1132) from the first node (1112), the connection attempt request being associated with a unique connection identifier, UCI, that is assigned by the relay service node (1116);
accepting the third connection (1132) from the first node (1112);
binding the second connection (1120) with the third connection (1132) using the unique connection identifier, UCI; and
forwarding (1142) the message (1122) requesting secure connection establishment with the first node to the first node (1112);
wherein the method provides a SSL/TLS handshake between the first node (1112) and the second node (1110), and wherein SSL/TLS traffic between the first node (1112) and the second node (1110) is transparent to the relay service node (1116), thus preserving end-to-end SSL/TLS security between the first node (1112) and the second node (1110).

2. The method of claim 1, wherein in a response of the control message the relay service node (1116) returns the transmission control protocol port which is allowed in the restrictive access network (1114), the transmission control protocol port being shared by all second connections (1120).

3. The method of claim 1, wherein the relay service node (1116) assigns the fully qualified domain name for the first node (1110), and returns the fully qualified domain name in a response of the control message.

4. The method of claim 1, wherein the relay service node (1116) buffers the ClientHello message (1122) and the forwarding the message forwards the buffered ClientHello message to the first node (1110) over the third connection (1132).

5. The method of claim 1, wherein the relay service node (1116) listens on first transmission control protocol port for the control connection (920), and wherein the relay service node (1116) further listens on second transmission control protocol port for the second connection (1120) and the third connection (1132).

6. The method of claim 1, wherein the relay service node (1116) listens on first transmission control protocol port for the control connection (920) and the second connection (1122), and the relay service node (1116) listens on second transmission control protocol port for the third connection (1132).

7. The method of claim 1, wherein the second node (1110) is in a restrictive access network.

8. The method of claim 1, wherein the relay service node (1116) sends the request to establish the third connection via a push notification server (1316) to the first node (1112).

9. A relay service node (1116) configured to facilitate establishment of a secure connection between a first node (1110) within a restrictive access network (821), and a second node (1112), the relay service node (1116) comprising:
a processor (1440); and
a communications subsystem (1430),
wherein the relay service node (1116) is configured to carry out the method steps of any preceding claim.

## Patentansprüche

1. Verfahren an einem Relaisdienstknoten (1116), um die Herstellung einer sicheren Verbindung zwischen einem ersten Knoten (1112) innerhalb eines restriktiven Zugangsnetzes (1114) und einem zweiten Knoten (1110) zu erleichtern, wobei das Verfahren Folgendes umfasst:
Akzeptieren einer Steuerverbindung (920) vom ersten Knoten (1112);
nach dem Akzeptieren der Steuerverbindung (920) und dem Empfangen (932) einer Steuernachricht von dem ersten Knoten (1112), um den Relaisdienstknoten (1116) aufzufordern, dem ersten Knoten (1112) einen vollqualifizierten Domänennamen zuzuordnen, Zuordnen eines vollqualifizierten Domänennamens zu dem ersten Knoten (1112), wobei die an dem Relaisdienstknoten (1116) empfangene Steuernachricht den vollqualifizierten Domänennamen von dem ersten Knoten (1112) an den Relaisdienstknoten (1116) bereitstellt;
Akzeptieren einer zweiten Verbindung (1120) von dem zweiten Knoten (1110) und Empfangen einer Nachricht (1122) über die zweite Verbindung (1120), die die Herstellung einer sicheren Verbindung mit dem ersten Knoten (1112) anfordert, wobei die Nachricht (1122), die die Herstellung einer sicheren Verbindung anfordert, auch den vollqualifizierten Domänennamen, FQDN, für den ersten Knoten (1112) bereitstellt, wobei die über die zweite Verbindung (1120) empfangene Nachricht eine ClientHello-Nachricht (1122) des Secure-Socket-Layers ist, die eine Server Name Indication, SNI, mit einem Wert des vollqualifizierten Domänennamens für den ersten Knoten (1110) aufweist, und wobei der Relaisdienstknoten den FQDN für den ersten Knoten aus dem Feld zur Server Name Indication der ClientHello-Nachricht (1122) des Secure-Socket-Layers extrahiert;
als Reaktion auf das Bestimmen, dass der vollqualifizierte Domänenname, der durch die Nachricht (1122) bereitgestellt wird, die die Herstellung einer sicheren Verbindung anfordert, mit dem ersten Knoten (1112) übereinstimmt, Verwendung des vollqualifizierten Domänennamens für den ersten Knoten (1112), der durch die Nachricht (1122) bereitgestellt wird, die die Herstellung einer sicheren Verbindung mit dem ersten Knoten (1112) anfordert, und eines Ports des Übertragungssteuerungsprotokolls, dem das restriktive Zugangsnetz (1114) erlaubt, den ersten Knoten (1112) zu erreichen und eine Verbindung mit dem ersten Knoten (1112) auf dem Secure Sockets Layer/Transport Layer Security, SSL/TLS, aufzubauen, wobei die Herstellung Folgendes umfasst:
Senden (1124), über die Steuerverbindung (920), einer Verbindungsversuchsanforderung, um eine dritte Verbindung (1132) von dem ersten Knoten (1112) herzustellen, wobei die Verbindungsversuchsanforderung mit einer eindeutigen Verbindungskennung, (*unique connection identifier,* UCI), verbunden ist, die von dem Relaisdienstknoten (1116) zugewiesen wird;
Akzeptieren der dritten Verbindung (1132) von dem ersten Knoten (1112);
Binden der zweiten Verbindung (1120) an die dritte Verbindung (1132) unter Verwendung des eindeutigen Verbindungsidentifikators, UCI; und
Weiterleiten (1142) der Nachricht (1122), die die Herstellung einer sicheren Verbindung mit dem ersten Knoten anfordert, an den ersten Knoten (1112);
wobei das Verfahren einen SSL/TLS-Handshake zwischen dem ersten Knoten (1112) und dem zweiten Knoten (1110) bereitstellt, und wobei der SSL/TLS-Datenverkehr zwischen dem ersten Knoten (1112) und dem zweiten Knoten (1110) für den Relaisdienstknoten (1116) transparent ist, wodurch die End-zu-End SSL/TLS-Sicherheit zwischen dem ersten Knoten (1112) und dem zweiten Knoten (1110) erhalten bleibt.

2. Verfahren nach Anspruch 1, wobei der Relaisdienstknoten (1116) als Antwort auf die Steuernachricht den Port des Übertragungssteuerprotokolls zurückgibt, der in dem restriktiven Zugangsnetz (1114) erlaubt ist, wobei der Port des Übertragungssteuerungsprotokolls von allen zweiten Verbindungen (1120) gemeinsam genutzt wird.

3. Verfahren nach Anspruch 1, wobei der Relaisdienstknoten (1116) den vollqualifizierten Domänennamen für den ersten Knoten (1110) zuweist und den vollqualifizierten Domänennamen in einer Antwort auf die Steuernachricht zurückgibt.

4. Verfahren nach Anspruch 1, wobei der Relaisdienstknoten (1116) die ClientHello-Nachricht (1122) puffert und das Weiterleiten der Nachricht die gepufferte ClientHello-Nachricht über die dritte Verbindung (1132) an den ersten Knoten (1110) weiterleitet.

5. Verfahren nach Anspruch 1, wobei der Relaisdienstknoten (1116) an einem ersten Port des Übertragungssteuerungsprotokolls auf die Steuerverbindung (920) lauscht, und wobei der Relaisdienstknoten (1116) ferner an einem zweiten Port des Übertragungssteuerungsprotokolls auf die zweite Verbindung (1120) und die dritte Verbindung (1132) lauscht.

6. Verfahren nach Anspruch 1, wobei der Relaisdienstknoten (1116) an einem ersten Port des Übertragungssteuerungsprotokolls auf die Steuerverbindung (920) und die zweite Verbindung (1122) lauscht, und der Relaisdienstknoten (1116) an einem zweiten Port des Übertragungssteuerungsprotokolls auf die dritte Verbindung (1132) lauscht.

7. Verfahren nach Anspruch 1, wobei sich der zweite Knoten (1110) in einem restriktiven Zugangsnetz befindet.

8. Verfahren nach Anspruch 1, wobei der Relaisdienstknoten (1116) die Anforderung, die dritte Verbindung herzustellen, über einen Push-Benachrichtigungsserver (1316) an den ersten Knoten (1112) sendet.

9. Relaisdienstknoten (1116), der konfiguriert ist, um die Herstellung einer sicheren Verbindung zwischen einem ersten Knoten (1110) innerhalb eines restriktiven Zugangsnetzes (821) und einem zweiten Knoten (1112) zu erleichtern, wobei der Relaisdienstknoten (1116) Folgendes umfasst:
einen Prozessor (1440); und
ein Kommunikationsuntersystem (1430), wobei der Relaisdienstknoten (1116) konfiguriert ist, um die Verfahrensschritte jedes vorangehenden Anspruchs auszuführen.

## Revendications

1. Procédé au niveau d'un nœud de service de relais (1116) pour faciliter l'établissement d'une connexion sécurisée entre un premier nœud (1112) à l'intérieur d'un réseau d'accès restrictif (1114), et un second nœud (1110), le procédé comprenant :
l'acceptation d'une connexion de contrôle (920) provenant du premier nœud (1112) ;
suite à l'acceptation de la connexion de contrôle (920) et à la réception (932) d'un message de contrôle provenant du premier nœud (1112) pour demander au nœud de service de relais (1116) d'associer un nom de domaine complet au premier nœud (1112), l'association d'un nom de domaine complet au premier nœud (1112), le message de contrôle reçu au niveau du nœud de service de relais (1116) fournissant le nom de domaine complet du premier nœud (1112) au nœud de service de relais (1116) ;
l'acceptation d'une deuxième connexion (1120) provenant du second nœud (1110), et la réception, sur la deuxième connexion (1120), d'un message (1122) demandant l'établissement d'une connexion sécurisée avec le premier nœud (1112), le message (1122) demandant l'établissement de la connexion sécurisée fournissant également le nom de domaine complet, FQDN, pour le premier nœud (1112), le message reçu sur la deuxième connexion (1120) étant un message ClientHello (1122) de couche de sockets sécurisée présentant une indication du nom du serveur, SNI, avec une valeur du nom de domaine complet pour le premier nœud (1110) et dans lequel le nœud de service de relais extrait le FQDN pour le premier nœud provenant du champ d'indication du nom du serveur du message ClientHello (1122) de couche de sockets sécurisée ;
en réponse à la détermination selon laquelle le nom de domaine complet fourni par le message (1122) demandant l'établissement d'une connexion sécurisée correspond au premier nœud (1112), l'utilisation du nom de domaine complet pour le premier nœud (1112) fourni par le message (1122) demandant l'établissement d'une connexion sécurisée avec le premier nœud (1112) et d'un port de protocole de contrôle de transmission autorisé par le réseau d'accès restrictif (1114) pour atteindre le premier nœud (1112) et établir une connexion de couche de sockets sécurisée/sécurité de la couche de transport, SSL/TLS au premier nœud (1112), l'établissement comprenant :
l'envoi (1124), sur la connexion de contrôle (920), d'une demande de tentative de connexion pour établir une troisième connexion (1132) à partir du premier nœud (1112), la demande de tentative de connexion étant associée à un identifiant de connexion unique, UCI, qui est attribué par le nœud de service de relais (1116) ;
l'acceptation de la troisième connexion (1132) provenant du premier nœud (1112) ;
la liaison de la deuxième connexion (1120) à la troisième connexion (1132) à l'aide de l'identifiant de connexion unique, UCI ; et
le transfert (1142) du message (1122) demandant l'établissement d'une connexion sécurisée avec le premier nœud au premier nœud (1112) ;
dans lequel le procédé fournit une négociation SSL/TLS entre le premier nœud (1112) et le second nœud (1110), et dans lequel le trafic SSL/TLS entre le premier nœud (1112) et le second nœud (1110) est transparent au nœud de service de relais (1116), préservant ainsi la sécurité SSL/TLS de bout en bout entre le premier nœud (1112) et le second nœud (1110).

2. Procédé selon la revendication 1, dans lequel dans une réponse du message de contrôle le nœud de service de relais (1116) renvoie le port de protocole de contrôle de transmission qui est autorisé dans le réseau d'accès restrictif (1114), le port de protocole de contrôle de transmission étant partagé par toutes les deuxièmes connexions (1120).

3. Procédé selon la revendication 1, dans lequel le nœud de service de relais (1116) attribue le nom de domaine complet pour le premier nœud (1110), et renvoie le nom de domaine complet dans une réponse du message de contrôle.

4. Procédé selon la revendication 1, dans lequel le nœud de service de relais (1116) met en mémoire tampon le message ClientHello (1122) et le transfert du message transfère le message ClientHello mis en mémoire tampon au premier nœud (1110) sur la troisième connexion (1132).

5. Procédé selon la revendication 1, dans lequel le nœud de service de relais (1116) écoute sur le premier port de protocole de contrôle de transmission la connexion de contrôle (920), et dans lequel le nœud de service de relais (1116) écoute en outre sur le second port de protocole de contrôle de transmission la deuxième connexion (1120) et la troisième connexion (1132).

6. Procédé selon la revendication 1, dans lequel le nœud de service de relais (1116) écoute sur le premier port de protocole de contrôle de transmission la connexion de contrôle (920) et la deuxième connexion (1122), et le nœud de service de relais (1116) écoute sur le second port de protocole de contrôle la troisième connexion (1132).

7. Procédé selon la revendication 1, dans lequel le second nœud (1110) se trouve dans un réseau d'accès restrictif.

8. Procédé selon la revendication 1, dans lequel le nœud de service de relais (1116) envoie la demande d'établissement de la troisième connexion par l'intermédiaire d'un serveur de notification poussée (1316) au premier nœud (1112).

9. Nœud de service de relais (1116) configuré pour faciliter l'établissement d'une connexion sécurisée entre un premier nœud (1110) au sein d'un réseau à accès restrictif (821), et un second nœud (1112), le nœud de service de relais (1116) comprenant :
un processeur (1440) ; et
un sous-système de communication (1430),
le nœud de service de relais (1116) étant configuré pour mettre en œuvre les étapes du procédé selon l'une quelconque des revendications précédentes.
